# EUROPÄISCHE PATENTSCHRIFT

(11) **EP 0 810 233 B1**
(45) Veröffentlichungstag und Bekanntmachung des Hinweises auf die Patenterteilung: **25.07.2001**
(21) Anmeldenummer: 97108001.5
(22) Anmeldetag: 16.05.1997
(51) Int. Cl.: C08F 2/40, C08F 4/625, C08F 10/10

(54) **Verfahren zur Herstellung von Polymerisaten von C2- bis C12-Alkenen unter Zusatz eines Reaktionsverzögerers**
Process for the preparation of polymers of C2 to C12-alkenes using a retarding agent
Procédé pour la préparation de polymères d'alcènes en C2 à C12 utilisant un agent retardateur

(30) Priorität: 31.05.1996 DE 19621838
(43) Veröffentlichungstag der Anmeldung: 03.12.1997
(73) Patentinhaber: BASF AKTIENGESELLSCHAFT, 67056 Ludwigshafen (DE)
(72) Erfinder: Rösch, Joachim, Dr., 67069 Ludwigshafen (DE); Bidell, Wolfgang, Dr., 67112 Mutterstadt (DE); Langhauser, Franz, Dr., 67098 Bad Dürkheim (DE)

(56) Entgegenhaltungen:
- EP-A- 0 381 184
- EP-A- 0 679 662
- PATENT ABSTRACTS OF JAPAN vol. 096, no. 004, 30.April 1996 & JP 07 316216 A (IDEMITSU KOSAN CO LTD), 5.Dezember 1995,

## Beschreibung

Die vorliegende Erfindung betrifft Verfahren zur Herstellung von Polymerisaten von C₂- bis C₁₂-Alkenen bei Temperaturen im Bereich von -50 bis 300°C und Drücken im Bereich von 0,5 bis 3000 bar in Gegenwart eines Katalysatorsystems enthaltend
A) einen Metallocenkomplex
   und
B) eine metalloceniumionenbildende Verbindung.

Bei der Herstellung von Polymerisaten von C₂- bis C₁₂-Alkenen kann es vorkommen, daß durch eine hohe Katalysatoraktivität störende Polymerisationserscheinungen in der Katalysatorleitung auftreten.

In der EP-A 630 910 wird beschrieben, daß durch den Zusatz von Lewis-Basen wie Alkohole, Ketone, Ether usw. die Aktivität von Metallocenkatalysatorsystemen verringert werden kann. Die Reversibilität dieser Desaktivierung wird jedoch nur bedingt gewährleistet, da für eine erneute Aktivierung hohe Mengen an Aluminiumalkyl-Cokatalysatoren zugesetzt werden müssen.

Aus der US-A 5,066,736 ist bekannt, daß die Aktivität von Ziegler-Natta-Katalysatoren ebenfalls durch Zusatz von Lewis-Basen verringert werden kann. Zur erneuten Aktivierung müssen auch hier Aluminiumalkyle zugesetzt werden.

Aufgabe der vorliegenden Erfindung was es daher, Verfahren zur Herstellung von Polymerisaten von C₂- bis C₁₂-Alkenen zur Verfügung zu stellen, bei denen aktive Katalysatoren kurzzeitig desaktiviert werden können, so daß keine störenden Polymerisationserscheinungen auftreten, wobei jedoch die desaktivierten Katalysatorsysteme ohne Zusatz weiterer Verbindungen wieder aktiv werden.

Demgemäß wurden Verfahren zur Herstellung von Polymerisaten von C₂- bis C₁₂-Alkenen bei Temperaturen im Bereich von -50 bis 300°C und Drücken von 0,5 bis 3000 bar in Gegenwart eines Katalysatorsystems, enthaltend
A) einen Metallocenkomplex
   und
B) eine metalloceniumionenbildende Verbindung, gefunden, wobei man eine Verbindung der allgemeinen Formel I 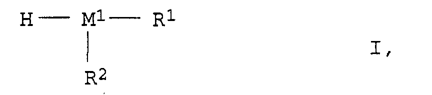 in der

- M¹: Bor, Aluminium, Gallium, Indium oder Thallium bedeutet und
- R¹, R²: für Wasserstoff, C₁- bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest, 5- bis 7-gliedriges Cycloalkyl, das seinerseits ein C₁- bis C₁₀-Alkyl als Substituent tragen kann oder wobei R¹ und R² gemeinsam für 4 bis 15 C-Atome aufweisende cyclische Gruppen stehen,
zusetzt.

Von den bei dem erfindungsgemäßen Verfahren eingesetzten C₂- bis C₁₂-Alkene sind C₂- bis C₁₂-Alk-1-ene bevorzugt.

Vorzugsweise werden Ethylen, Propen, But-1-en, Pent-1-en, 4-Methyl-pent-1-en, Hex-1-en, Hept-1-en oder Oct-1-en, sowie Gemische aus diesen C₂- bis C₁₂-Alk-1-enen eingesetzt. Besonders bevorzugt sind Homo- oder Copolymerisate des Ethylens oder des Propens, wobei der Anteil an Ethylen bzw. Propen in den Copolymerisaten mindestens 50 mol-% beträgt. Bei den Copolymerisaten des Propens sind diejenigen bevorzugt, die als weitere Monomere Ethylen oder But-1-en oder deren Mischungen enthalten, bei den Copolymerisaten des Ethylens diejenigen, die als weitere Monomere Propen, But-1-en, Hex-1-en oder Oct-1-en oder Mischungen daraus enthalten.

Das erfindungsgemäße Verfahren wird bei Temperaturen im Bereich von -50 bis 300°C, vorzugsweise im Bereich von 0 bis 150°C und bei Drücken im Bereich von 0,5 bis 3000 bar, vorzugsweise im Bereich von 1 bis 80 bar durchgeführt. Reaktionszeiten im Bereich von 0,1 bis 24 Stunden sind bevorzugt, insbesondere 0,2 bis 6 Stunden.

Die Polymerisation kann in Lösung, in Suspension, in flüssigen Monomeren oder in der Gasphase durchgeführt werden. Bevorzugt erfolgt die Polymerisation in flüssigen Monomeren oder in Lösung.

Das Verfahren kann sowohl kontinuierlich oder diskontinuierlich durchgeführt werden. Geeignete Reaktoren sind u.a. kontinuierlich betriebene Rührkessel, wobei man gegebenenfalls auch eine Reihe von mehreren hintereinander geschalteten Rührkesseln verwenden kann (Reaktorkaskade).

Das erfindungsgemäße Verfahren wird in Gegenwart eines Katalysatorsystems durchgeführt, das
A) einen Metallocenkomplex
   und
B) eine metalloceniumionenbildende Verbindung
   enthält.

Als Metallocenkomplexe A) eigenen sich besonders solche der allgemeinen Formel II 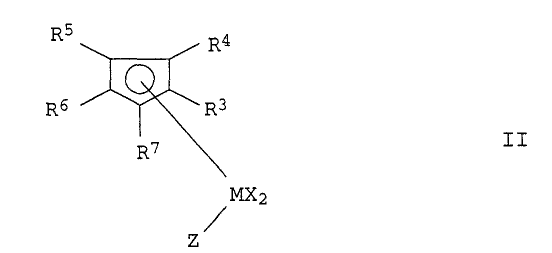 in der die Substituenten folgende Bedeutung haben:
- M: Titan, Zirkonium, Hafnium, Vanadium, Niob oder Tantal
- X: Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR⁸ oder -NR⁸R⁹,
wobei
- R⁸ und R⁹: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,
- R³ bis R⁷: Wasserstoff, C₁- bis C₂₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende gesättigte oder ungesättigte cyclische Gruppen stehen können oder Si(R¹⁰)₃ mit
- R¹⁰: C₁- bis C₁₀-Alkyl, C₃- bis C₁₀-Cycloalkyl oder C₆- bis C₁₅-Aryl,
- Z: für X oder 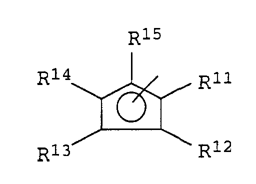 steht,
wobei die Reste
- R¹¹ bis R¹⁵: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome aufweisende gesättigte oder ungesättigte cyclische Gruppen stehen können, oder Si(R¹⁶)₃ mit
- R¹⁶: C₁- bis C₁₀-Alkyl, C₆- bis C₁₅-Aryl oder C₃- bis C₁₀-Cycloalkyl, oder wobei die Reste R⁶ und Z gemeinsam eine Gruppierung -R¹⁷-A-bilden, in der
- R¹⁷: 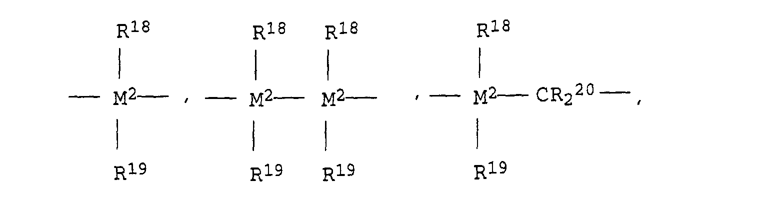 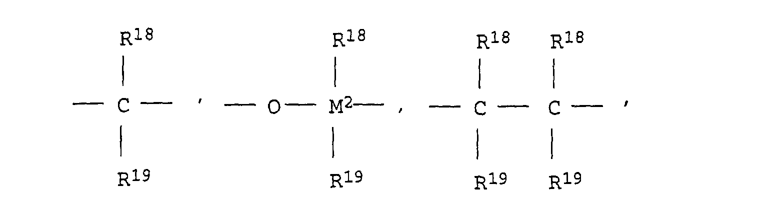 = BR¹⁸, = AlR¹⁸, -Ge-, -Sn-, -O-, -S-, = SO, = SO₂, = NR¹⁸, = CO, = PR¹⁸ oder = P(O)R¹⁸ ist,
wobei
- R¹⁸, R¹⁹ und R²⁰: gleich oder verschieden sind und ein Wasserstoff atom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Aryl-alkenylgruppe oder eine C₇-C₄₀-Alkylarylgruppe be deuten oder wobei zwei benachbarte Reste jeweils mit den sie verbindenden Atomen einen Ring bilden, und
- M²: Silicium, Germanium oder Zinn ist,
- A: -o-, -s-, 〉NR²¹ oder 〉PR²¹ bedeuten, mit
- R²¹: C₁- bis C₁₀-Alkyl, C₆- bis C₁₅-Aryl, C₃- bis C₁₀-Cycloalkyl, Alkylaryl oder Si(R²²)₃,
- R²²: Wasserstoff, C₁- bis C₁₀-Alkyl, C₆- bis C₁₅-Aryl, das seinerseits mit C₁- bis C₄-Alkylgruppen substituiert sein kann oder C₃- bis C₁₀-Cycloalkyl
oder wobei die Reste R⁶ und R¹⁴ gemeinsam eine Gruppierung -R¹⁷-bilden.

Von den Metallocenkomplexen der allgemeinen Formel II sind 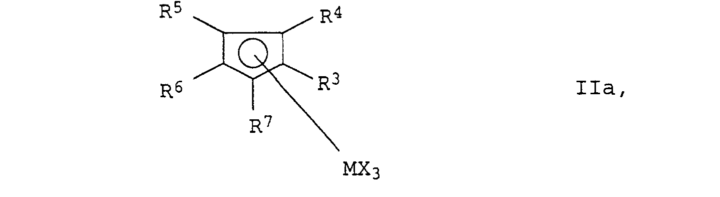 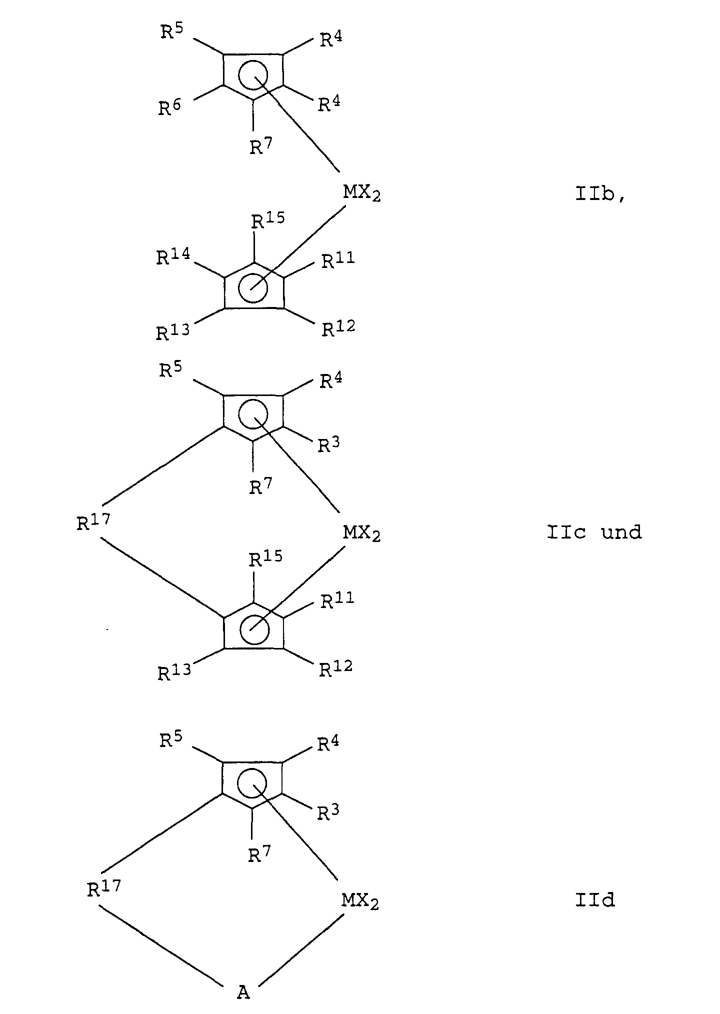 bevorzugt.

Die Reste X können gleich oder verschieden sein, bevorzugt sind sie gleich.

Von den Verbindungen der Formel IIa sind insbesondere diejenigen bevorzugt, in denen
- M: Titan, Zirkonium oder Hafnium,
- X: Chlor, C₁-bis C₄-Alkyl oder Phenyl und
- R³ bis R⁷: Wasserstoff oder C₁- bis C₄-Alkyl bedeuten.

Von den Verbindungen der Formel IIb sind als bevorzugt diejenigen zu nennen, bei denen
- M: für Titan, Zirkonium oder Hafnium steht,
- X: für Chlor, C₁-bis C₄-Alkyl oder Phenyl,
- R³ bis R⁷: Wasserstoff, C₁- bis C₂₀-Alkyl oder Si(R¹⁰)₃,
- R¹¹ bis R¹⁵: Wasserstoff, C₁- bis C₂₀-Alkyl oder Si(R¹⁶)₃ bedeuten.

Insbesondere sind die Verbindungen der Formel IIb geeignet, in denen die Cyclopentadienylreste gleich sind.

Beispiele für besonders geeignete Verbindungen sind u.a.:
Bis(cyclopentadienyl)zirkoniumdichlorid,
Bis(methylcyclopentadienyl)-zirkoniumdichlorid,
Bis(ethylcyclopentadienyl)-zirkoniumdichlorid,
Bis(n-butylcyclopentadienyl)-zirkoniumdichlorid
Bis(n-octadecylcyclopentadienyl)zirkoniumdichlorid und
Bis(trimethylsilylcyclopentadienyl)-zirkoniumdichlorid
sowie die entsprechenden Dimethylzirkoniumverbindungen.

Von den Verbindungen der Formel IIc sind diejenigen besonders geeignet, in denen
- R³ und R¹¹: gleich sind und für Wasserstoff oder C₁- bis C₁₀-Alkylgruppen stehen,
- R⁷ und R¹⁵: gleich sind und für Wasserstoff, eine Methyl-, Ethyl-, iso-Propyl- oder tert.-Butylgruppe stehen
- R⁴, R⁵, R¹² und R¹³: die Bedeutung
R⁵ und R¹³ C₁- bis C₄-Alkyl
R⁴ und R¹² Wasserstoff haben oder zwei benachbarte Reste R⁴ und R⁵ sowie
R¹² und R¹³ gemeinsam für 4 bis 12 C-Atome aufweisende cyclische Gruppen stehen,
- R¹⁷: für 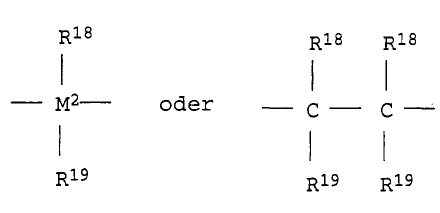 steht,
- M: für Titan, Zirkonium oder Hafnium und
- X: für Chlor, C₁-bis C₄-Alkyl oder Phenyl stehen.

Beispiele für besonders geeignete Komplexverbindungen sind u.a.
Dimethylsilandiylbis(cyclopentadienyl)-zirkoniumdichlorid,
Dimethylsilandiylbis(indenyl)-zirkoniumdichlorid,
Dimethylsilandiylbis (tetrahydroindenyl)-zirkoniumdichlorid,
Ethylenbis(cyclopentadienyl)-zirkoniumdichlorid,
Ethylenbis(indenyl)-zirkoniumdichlorid,
Ethylenbis(tetrahydroindenyl)-zirkoniumdichlorid,
Tetramethylethylen-9-fluorenylcyclopentadienylzirkoniumdichlorid,
Dimethylsilandiylbis(-3-tert.butyl-5-methylcyclopentadienyl)-zirkoniumdichlorid,
Dimethylsilandiylbis(-3-tert.butyl-5-ethylcyclopentadienyl)-zirkoniumdichlorid,
Dimethylsilandiylbis(-2-methylindenyl)-zirkoniumdichlorid,
Dimethylsilandiylbis(-2-isopropylindenyl)-zirkoniumdichlorid,
Dimethylsilandiylbis(-2-tert.butylindenyl)-zirkoniumdichlorid,
Diethylsilandiylbis(-2-methylindenyl)-zirkoniumdibromid,
Dimethylsilandiylbis(-3-methyl-5-methylcyclopentadienyl)-zirkoniumdichlorid,
Dimethylsilandiylbis(-3-ethyl-5-isopropylcyclopentadienyl)-zirkoniumdichlorid,
Dimethylsilandiylbis(-2-methylindenyl)-zirkoniumdichlorid,
Dimethylsilandiylbis(-2-methylbenzindenyl)-zirkoniumdichlorid
Dimethylsilandiylbis(2-ethylbenzindenyl)zirkoniumdichlorid,
Methylphenylsilandiylbis(2-ethylbenzindenyl)zirkoniumdichlorid,
Methylphenylsilandiylbis(2-methylbenzindenyl)zirkoniumdichlorid,
Diphenylsilandiylbis(2-methylbenzindenyl)zirkoniumdichlorid,
Diphenylsilandiylbis(2-ethylbenzindenyl)zirkoniumdichlorid, und
Dimethylsilandiylbis(-2-methylindenyl)-hafniumdichlorid
sowie die entsprechenden Dimethylzirkoniumverbindungen.

Bei den Verbindungen der allgemeinen Formel IId sind als besonders geeignet diejenigen zu nennen, in denen
- M: für Titan oder Zirkonium,
- X: für Chlor, C₁-bis C₄-Alkyl oder Phenyl stehen.
- R¹⁷: für 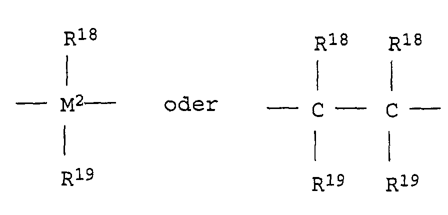 steht,
- A: für -o- , -s- , 〉NR²¹ und
R³ bis R⁵ und R⁷ für Wasserstoff, C₁- bis C₁₀-Alkyl, C₃- bis C₁₀-Cycloalkyl, C₆- bis C₁₅-Aryl oder Si(R¹⁰)₃ stehen, oder wobei zwei benachbarte Reste für 4 bis 12 C-Atome aufweisende cyclische Gruppen stehen.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 beschrieben.

Es können auch Mischungen verschiedener Metallocenkomplexe eingesetzt werden.

Als Komponente B) enthält das bei dem erfindungsgemäßen Verfahren eingesetzte Katalysatorsystem eine metalloceniumionenbildende Verbindung.

Geeignete metalloceniumionenbildende Verbindungen sind starke, neutrale Lewissäuren, ionische Verbindungen mit lewissauren Kationen und ionische Verbindungen mit Brönsted-Säuren als Kation.

Als starke, neutrale Lewissäuren sind Verbindungen der allgemeinen Formel III

M³X¹X²X³ III

bevorzugt, in der
- M³: ein Element der III. Hauptgruppe des Periodensystems bedeutet, insbesondere B, Al oder Ga, vorzugsweise B,
- X¹, X² und X³: für C1- bis C10-Alkyl, C6- bis C15-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel III, in der X¹, X² und X³ gleich sind, vorzugsweise Tris(pentafluorphenyl)boran.

Als ionische Verbindungen mit lewissauren Kationen sind Verbindungen der allgemeinen Formel IV

[(Y^{a+})Q₁Q₂...Q_{z}]^{d+} (IV)

geeignet, in denen
- Y: ein Element der I. bis VI. Hauptgruppe oder der I. bis VIII. Nebengruppe des Periodensystems bedeutet,
- Q₁ bis Q_{z}: für einfach negativ geladene Reste wie C₁- bis C₂₈-Alkyl, C₆- bis C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₁- bis C₁₀-Cycloalkyl, welches gegebenenfalls mit C₁- bis C₁₀-Alkylgruppen substituiert sein kann, Halogen, C₁- bis C₂₈-Alkoxy, C₆- bis C₁₅-Aryloxy, Silyl- oder Mercaptylgruppen
- a: für ganze Zahlen von 1 bis 6 steht
- z: für ganze Zahlen von 0 bis 5
- d: der Differenz a-z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nicht koordinierende Gegenionen, insbesondere Borverbindungen, wie sie auch in der WO 91/09882 genannt werden, bevorzugt Tetrakis (pentafluorophenyl) borat.

Ionische Verbindungen mit Brönsted-Säuren als Kationen und vorzugsweise ebenfalls nicht koordinierende Gegenionen sind in der WO 91/09882 genannt, bevorzugtes Kation ist das N,N-Dimethylanilinium.

Die Menge an metalloceniumionenbildenden Verbindungen beträgt bevorzugt 0,1 bis 10 Äquivalente, bezogen auf den Metallocenkomplex II.

Besonders geeignet als metalloceniumionenbildende Verbindung B) sind offenkettige oder cyclische Alumoxanverbindungen der allgemeinen Formel V oder VI 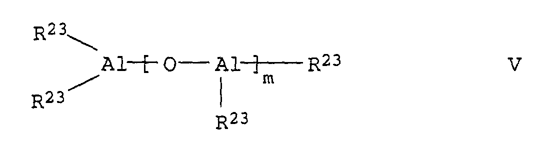 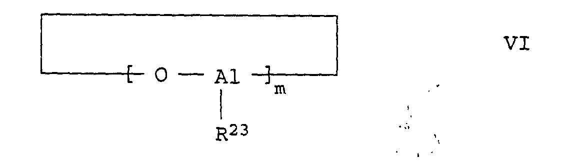 wobei
- R²³: eine C₁- bis C₄-Alkylgruppe bedeutet, bevorzugt Methyl- oder Ethylgruppe und m für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US A 4,794,096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.

Vorzugsweise werden sowohl die Metallocenkomplexe (Komponente A) als auch die metalloceniumionenbildende Verbindungen (Komponente B) in Lösung eingesetzt, wobei aromatische Kohlenwasserstoffe mit 6 bis 20 C-Atomen, insbesondere Xylole und Toluol, besonders bevorzugt sind.

Weiterhin können als Komponente B) Aryloxyalumoxane, wie in der US-A 5,391,793 beschrieben, Aminoaluminoxane, wie in der US-A 5,371,260 beschrieben, Aminoaluminoxanhydrochloride, wie in der EP-A 633 264 beschrieben, Siloxyaluminoxane, wie in der EP-A 621 279 beschrieben, oder Mischungen daraus eingesetzt werden.

Es hat sich als vorteilhaft erwiesen, die Metallocenkomplexe und die oligomere Alumoxanverbindung in solchen Mengen zu verwenden, daß das atomare Verhältnis zwischen Aluminium aus der oligomeren Alumoxanverbindung und dem Übergangsmetall aus den Metallocenkomplexen im Bereich von 10:1 bis 10⁶:1, insbesondere im Bereich von 10:1 bis 10⁴:1, liegt.

Das bei dem erfindungsgemäßen Verfahren eingesetzte Katalysatorsystem kann auch auf einen anorganischen oder organischen Träger aufgebracht sein. Als Trägermaterialien werden vorzugsweise feinteilige Träger eingesetzt, die bevorzugt einen Teilchendurchmesser im Bereich von 1 bis 300 *µ*m aufweisen, insbesondere von 30 bis 70 µm. Geeignete anorganische Träger sind beispielsweise Magnesiumchlorid oder Kieselgele, bevorzugt solche der Formel SiO₂ · a Al₂O₃, worin a für eine Zahl im Bereich von 0 bis 2 steht, vorzugsweise 0 bis 0,5; dies sind also Alumosilikate oder Siliciumdioxid. Derartige Produkt sind im Handel erhältlich, z.B. Silica Gel 332 der Fa. Grace. Als organische Träger sind beispielsweise feinteilige Polyolefine geeignet, wie feinteiliges Polyethylen oder Polypropylen.

Ein gut geeignetes Verfahren zur Trägerung des im erfindungsgemäßen Verfahren eingesetzten Katalysatorsystems ist in der Patentanmeldung DE-A 19626834.6 oder der EP-A 295 312 beschrieben. Das in DE-A 19626834.6 beschriebene Verfahren umfaßt im allgemeinen die folgenden Verfahrensschritte:
a) Kontaktierung einer Lösung einer metalloceniumionenbildenden Verbindung mit einem zweiten Lösungsmittel, in welchem diese Verbindung nur wenig löslich ist, in Gegenwart des Trägermaterials,
b) Entfernung zumindest eines Teils der Lösungsmittel vom Trägermaterial und
c) Kontaktierung einer Lösung eines Gemisches einer metalloceniumionen-bildenden Verbindung und eines Übergangsmetallkomplexes mit einem zweiten Lösungsmittel, in welchem dieses Gemisch nur wenig löslich ist, in Gegenwart des nach a) und b) erhaltenen Trägermaterials.

Bei dem erfindungsgemäßen Verfahren wird eine Verbindung der allgemeinen Formel I zugesetzt. Diese Verbindung fungiert als Reaktionsverzögerer und blockiert die Aktivität des Katalysatorsystems. Diese Blockierung oder Desaktivierung des Katalysatorsystems ist reversibel und das Katalysatorsystem entfaltet nach einer Blockierungszeit, die je nach Art des Katalysatorsystems im Bereich von 0,5 bis 35 Minuten, vorzugsweise im Bereich von 5 bis 25 Minuten liegt, ohne Zugabe einer weiteren Verbindung seine Aktivität wieder. Hierbei steigt die Aktivität des Katalysatorsystems auf das gleiche oder sogar auf ein bis zu 30 % höheres Niveau an, im Vergleich zu einer Polymerisation ohne Zusatz dieser Verbindung der allgemeinen Formel I. Die Menge der Verbindung der allgemeinen Formel I kann in weiten Bereichen variieren, ohne daß dies für die Blockierung der Aktivität des Katalysatorsystems eine Rolle spielt. Als geeignet haben sich Mengen im Bereich von 0,1 bis 10 000, bevorzugt 0,5 bis 1000, insbesondere 1 bis 100 Äquivalente, bezogen auf das Übergangsmetall der Katalysatorsysteme, erwiesen.

Bevorzugte Verbindungen der allgemeinen Formel I sind solche, in denen
- M¹: Bor oder Aluminium bedeutet, insbesondere Bor und
- R¹ und R²: für Wasserstoff, C₁- bis C₄-Alkyl, insbesondere iso-Butyl, C₆- bis C₁₀-Aryl oder 5- bis 7-gliedriges Cycloalkyl stehen und wobei R¹ und R² gemeinsam für 4 bis 15 C-Atome, vorzugsweise 6 bis 12 C-Atome aufweisende cyclische Gruppen stehen.

Besonders bevorzugt stehen R¹ und R² gemeinsam für 4 bis 15 C-Atome, vorzugsweise 6 bis 12 C-Atome aufweisende bicyclische Gruppen, beispielsweise für Bicyclohexane, Bicycloheptane, Bicyclooctane, Bicyclononane oder Bicyclodecane.

Besonders bevorzugte Verbindungen der allgemeinen Formel I sind:

Diisobutylaluminiumhydrid, Diisobutylborhydrid, Dicyclohexylaluminiumhydrid und 9-Borabicyclononan[3.3.1].

Es können auch Mischungen verschiedener Verbindungen der allgemeinen Formel I zugesetzt werden. Verbindungen der allgemeinen Formel I sowie Verfahren zu ihrer Herstellung sind an sich bekannt und beispielsweise in Encyclopedia of Inorg. Chem., ed. R.B. King, (1994), Vol. 1, S. 116ff und S. 401ff beschrieben.

Es hat sich als bevorzugt erwiesen, wenn man die Verbindungen der allgemeinen Formel I als Lösung verwendet. Geeignete Lösungsmittel sind beispielsweise aromatische Kohlenwasserstoffe wie Benzol, Toluol, Ethylbenzol oder deren Mischungen und aliphatische Kohlenwasserstoffe wie Pentan, Heptan oder deren Mischungen.

Die Zugabe der Verbindungen der allgemeinen Formel I kann beliebig erfolgen, beispielsweise so, daß man das Monomer mit der Verbindung der allgemeinen Formel I vorlegt und dann das Katalysatorsystem hinzugibt oder das Katalysatorsystem mit der Verbindung der allgemeinen Formel I versetzt und dann das Monomer hinzugibt. Auch andere Reihenfolgen des Zusammengebens sind möglich, die Verbindung der allgemeinen Formel I kann auch mit der metalloceniumionenbildenden Verbindung B) oder einem anderen Cokatalysator vorgemischt werden. Ebenfalls möglich ist es, daß man das Monomere vorlegt und das Katalysatorsystem zusammen mit der Verbindung der allgemeinen Formel I zusetzt.

Es ist auch möglich, das Monomere und das Katalysatorsystem vorzulegen und dann die Verbindung der allgemeinen Formel I zuzusetzen, jedoch muß die Zeitspanne so gewählt sein, daß das Katalysatorsystem seine Aktivität nicht voll entfalten kann.

Diese Zeitspanne richtet sich nach der Art des Katalysatorsystems und kann bis zu 5 Minuten, vorzugsweise bis zu 1 Minute betragen.

Das im erfindungsgemäßen Verfahren verwendete Katalysatorensystem kann gegebenenfalls noch eine Metallverbindung der allgemeinen Formel IV

M⁴(R²⁴)ᵣ(R²⁵)ₛ(R²⁶)ₜ IV

in der
- M⁴: ein Alkali-, ein Erdalkalimetall oder ein Metall der III. Hauptgruppe des Periodensystems, d.h. Bor, Aluminium, Gallium, Indium oder Thallium bedeutet,
- R²⁴: C₁- bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest,
- R²⁵, R²⁶: Halogen, C₁- bis C₁₀-Alkyl, C₆- bis C₁₅-Aryl, Alkylaryl, Arylalkyl oder Alkoxy mit jeweils 1 bis 10 C-Atomen im Alkylrest und 6 bis 20 C-Atomen im Arylrest,
- r: eine ganze Zahl von 1 bis 3 und
- s und t: ganze Zahlen von 0 bis 2 bedeuten, wobei die Summe r+s+t der Wertigkeit von M⁴ entspricht,
enthalten.

Von den Metallverbindungen der allgemeinen Formel IV sind diejenigen bevorzugt, in denen
- M⁴: Lithium, Magnesium oder Aluminium bedeutet und
- R²⁴ bis R²⁶: für C₁- bis C₁₀-Alkyl stehen.

Besonders bevorzugte Metallverbindungen der Formel IV sind n-Butyl-Lithium, n-Butyl-n-octyl-Magnesium, n-Butyl-n-heptyl-Magnesium, Tri-n-hexyl-aluminium, Tri-iso-butyl-aluminium, Triethylaluminium und Trimethylaluminium.

Wenn die Metallverbindung IV eingesetzt wird, ist sie bevorzugt in einer Menge von 800:1 bis 1:1, insbesondere 500:1 bis 50:1 (molares Verhältnis von M⁴ aus IV zu Übergangsmetall) im Katalysatorsystem enthalten.

Auch die Zugabereihenfolge für die Metallverbindung IV ist nicht kritisch. Bei einem gut geeigneten Verfahren werden Übergangsmetallkatalysator, Verbindung I und Metallverbindung IV zusammen in den Reaktor dosiert, oder aber Verbindung I und Verbindung IV wurden vorgemischt und dann mit dem Katalysator in Berührung gebracht.

Das erfindungsgemäße Verfahren zur Herstellung von Polymerisaten von C₂- bis C₁₂-Alkenen zeichnet sich dadurch aus, daß aktive Katalysatorsysteme kurzzeitig desaktiviert bzw. blockiert werden können, so daß keine störenden Polymerisationserscheinungen auftreten, wobei jedoch die desaktivierten bzw. blockierten Katalysatorsysteme ohne Zusatz weiterer Verbindungen wieder aktiv werden. Außerdem können diese desaktivierten bzw. blockierten Katalysatorsysteme eine höhere Aktivität aufweisen, wenn sie wieder aktiv sind, als solche, die nicht desaktiviert bzw. blockiert wurden. Weiterhin wird bei dem erfindungsgemäßen Verfahren eine gleichmäßige Verteilung der Katalysatorsysteme im Reaktor ermöglicht, so daß lokale Anreicherungen, die sonst zu heftigen punktuellen Wärmeentwicklungen während der Polymerisation führen können, vermieden werden.

### Beispiele

### Beispiel 1

### Zugabe des Reaktionsverzögerers während der Reaktion (Propen)

In einem 1 l-Stahlautoklaven wurden 350 g Propen einkondensiert und auf 50°C erwärmt. Hierzu wurde eine Lösung von 80 mg (0,1 mmol) Bis(octadecylcyclopentadienyl)zirkoniumdichlorid in 32 ml 1,7 molarer toluolischer Methylalumoxan (MAO)-Lösung gegeben (Al:Zr = 500:1). Die Temperaturdifferenz zwischen Kühlmedium im Doppelmantel und Reaktortemperatur erhöhte sich nach Zugabe des Katalysatorsystems um 8°C. Nach 5 Minuten wurde 1 ml einer 0,5 molaren Lösung von 9-Borabicyclononan[3.3.1] in Hexan, versetzt mit 20 ml Ethylbenzol zugegeben. Die Temperaturdifferenz fiel innerhalb von 2 Minuten auf 0,5°C, im Verlauf von 25 Minuten stieg sie wieder auf 8°C an. Die Polymerisationszeit betrug insgesamt 2 Stunden. Nach Entspannen des Autoklaven und Abtrennen des nicht umgesetzten Propens erhielt man 320 g flüssiges Propenoligomer.
Molekulargewicht Mₙ: 640 g/mol
M_{w}/Mₙ: 2,1

Die Molekulargewichte Mₙ (Zahlenmittelwert) und M_{w} (Gewichtsmittelwert) wurden mittels Gelpermeationschromatographie (Lösungsmittel: THF, PS-Standard) bestimmt.

### Vergleichsbeispiel V1: Polymerisation ohne Reaktionsverzögerer

Es wurde wie in Beispiel 1 gearbeitet, jedoch ohne Zugabe von 9-Borabicyclononan[3.3.1]. Die Temperaturdifferenz erhöhte sich nach Zugabe des Katalysatorsystems ebenfalls um 8°C und begann nach 50 Minuten langsam abzufallen. Man erhielt 330 g flüssiges Propenoligomer.
Molekulargewicht Mₙ: 650 g/mol
M_{w}/Mₙ: 2,2

### Beispiele 2 bis 4

### Vormischen des Reaktionsverzögerers mit dem Katalysatorsystem (Propen)

### Beispiel 2

Es wurde wie in Beispiel 1 gearbeitet, jedoch wurde zum Propen eine Lösung von 80 mg Bis(octadecylcyclopentadienyl)zirkoniumdichlorid in 32 ml 1,7 molarer toluolischer MAO-Lösung und 1 ml 0,5 molarer 9-Borabicyclononan[3.3.1] gegeben (Al:Zr = 500:1, Zr = 5:1). Die Temperaturdifferenz zum Kühlmedium erhöhte sich um 4°C und fiel nach 30 Sekunden auf 0°C ab. Im Verlauf von 25 Minuten stieg sie auf 8°C und begann nach weiteren 40 Minuten langsam abzufallen. Man erhielt 320 g flüssiges Propenoligomer.
Molekulargewicht Mₙ: 650 g/mol
M_{w}/Mₙ: 2,2

### Beispiel 3

Es wurde wie in Beispiel 2 gearbeitet, jedoch 10 ml der 0,5 molaren 9-Borabicyclononan[3.3,1] -Lösung zugesetzt. Man erhielt ebenfalls 320 g flüssiges Propenoligomer. Der Verlauf der Reaktortemperatur und der Temperaturdifferenz zum Kühlmedium war wie in Beispiel 2.
Molekulargewicht Mₙ: 650 g/mol
M_{w}/Mₙ: 2,2

### Beispiel 4

Es wurde wie in Beispiel 2 gearbeitet, jedoch wurde zum Propen eine Lösung von 11,8 mg (0,02 mmol) Dimethylsilylbis(2-methyl-benzindenyl)zirkoniumdichlorid in 12,4 ml 1,7 molarer toluolischer MAO-Lösung gegeben (Al:Zr = 100:1), die mit 0,5 ml 0,5 molarer 9-Borabicyclononan[3.3.1] in Hexan vermischt war.

Die Temperaturdifferenz erhöhte sich innerhalb von 20 Minuten um 10°C und begann nach 70 Minuten abzufallen. Die Polymerisationszeit betrug insgesamt 90 Minuten. Man erhielt 310 g isotaktisches Polypropylen als weißes Pulver.
Molekulargewicht Mₙ: 148 000 g/mol
M_{w}/Mₙ: 2,1
Schmelzpunkt: 158°C

### Vergleichsbeispiel V2

### Polymerisation ohne Reaktionsverzögerer

Es wurde wie in Beispiel 4 gearbeitet, jedoch ohne Zugabe von 9-Borabicyclononan[3.3.1]. Die Temperaturdifferenz erhöhte sich schlagartig innerhalb von 20 Sekunden um 10°C und begann nach 70 Minuten abzufallen. Man erhielt 300 g isotaktisches Polypropylen als weißes Pulver.
Molekulargewicht Mₙ: 144 000 g/mol
M_{w}/Mₙ: 2,2
Schmelzpunkt: 158°C

### Vergleichsbeispiel V3

Es wurde wie im Vergleichsbeispiel V2 gearbeitet, jedoch das Katalysatorsystem in zwei Portionen (jeweils 50 Gew.-%) zugegeben. Nach der ersten Dosierung des Katalysatorsystems polymerisierte die Zuführleitung mit festem isotaktischem Polypropylen zu, so daß eine zweite Dosierung nicht mehr möglich war.

### Beispiel 5

Es wurde wie in Beispiel 2 gearbeitet, jedoch wurde statt 9-Borabicyclononan[3.3.1] 1 ml einer 0,5 molaren Lösung von Diisobutylaluminiumhydrid in Toluol zugegeben. Der Verlauf der Temperaturdifferenz war wie in Beispiel 2.

### Beispiel 6

### Vormischen des Reaktionsverzögerers mit dem Katalysatorsystem (Ethylen)

In einem 1 1-Dreihalskolben mit Rückflußkühlung wurden 500 ml Pentan vorgelegt. Hierzu wurde eine Lösung von 22,9 mg (0,1 mmol) Biscyclopentadienylzirkoniumdichlorid in 32 ml 1,7 molarer toluolischer MAO-Lösung und 2 ml einer 0,5 molaren Lösung von 9-Borabicyclononan[3.3.1] in Hexan gegeben.

Dann wurden 100 g Ethylen/h drucklos eingeleitet. Die Temperaturdifferenz zwischen Vor- und Rücklauf des Rückflußkühlers, die proportional zur Reaktionsgeschwindigkeit ist, stieg im Verlauf von 10 Minuten um 4°C. Nach 5 Stunden erhielt man 460 g kristallii nes Polyethylenpulver.
Molekulargewicht Mₙ: 290 000 g/mol
M_{w}/Mₙ: 2,3
Schmelzpunkt: 107°C

### Vergleichsbeispiel V4

Es wurde wie in Beispiel 5 gearbeitet, jedoch ohne Zugabe von 9-Borabicyclononan[3.3.1]. Die Temperaturdifferenz stieg innerhalb von 1 Minute um 4°C. Man erhielt 440 g kristallines Polyethylenpulver.
Molekulargewicht Mₙ: 278 000 g/mol
M_{w}/Mₙ: 2,4
Schmelzpunkt: 107°C

### Beispiel 7

### 7.1 Herstellung des Trägerkatalysators

10 g Kieselgel SG 332 (Fa. Grace) wurden im Vakuum 8 Stunden lang bei 180°C partiell dehydratisiert, danach in 40 ml Toluol suspendiert und anschließend mit 75 ml 1,53 molares Methylalumoxan (in Toluol, Fa. Witco) bei Raumtemperatur versetzt. Nach 12 Stunden wurde das mit Methylalumoxan desaktivierte Kieselgel mit 75 ml iso-Dodekan versetzt und weitere 1,5 Stunden bei Raumtemperatur gerührt. Anschließend wurde das Trägermaterial abfiltriert, zweimal mit je 20 ml Toluol und zweimal mit je 20 ml Pentan gewaschen und im Stickstoffwirbelstrom getrocknet.

Das mit Methylalumoxan desaktivierte Kieselgel wurden zu einer Mischung von 525 mg Bis-[3,3'-(2-Methyl-benzo[e]indenyl)]dimethylsilandiylzirkoniumdichlorid, 120 ml 1,53 molare Methylalumoxanlösung (in Toluol, Fa. Witco) zugegeben und bei Raumtemperatur gerührt. Nach 20 Stunden wurde innerhalb von 4 Stunden 200 ml iso-Dodekan langsam und kontrolliert zugegeben und weitere 1,5 Stunden bei Raumtemperatur gerührt. Anschließend wurde der Feststoff abfiltriert, mit je 25 ml Pentan gewaschen und im Stickstoffwirbelstrom getrocknet. Die Ausbeute am geträgerten Katalysator betrug 15,9 g.

### 7.2 Vergleichspolymerisation V5

In einen trockenen mit Stickstoff gespülten 10 l Autoklaven wurden 50 g Polypropylengries vorgelegt und bei einer Rührerdrehzahl von 350 U/min bei 25°C 7 l Propylen einkondensiert.
Anschließend wurde auf 65°C Innentemperatur erwärmt und 200 mg Trägerkatalysator in Gegenwart von 10 ml Triisobutylaluminium (2 M in Heptan) über eine Dosierschleuse in den Autoklaven zugegeben. Die während der Polymerisation entstehende Reaktionswärme wurde durch Gegenkühlung abgeführt, so daß die Innentemperatur konstant gehalten wird. Die Differenz der Kühlmittelvorlauftemperatur zur Innentemperatur in Abhängigkeit der Zeit wurde on-line bestimmt. Nach 6 Minuten wurde bereits die maximale Temperaturdifferenz ΔTₘₐₓ von 7,5°C erreicht, bereits nach 8 Minuten wurden Klopfgeräusche vom Rührer wahrgenommen und nach weiteren 35 Minuten mußte die Polymerisation wegen Agglomerat- und Belagbildungen abgebrochen werden. Die Ausbeute an stark agglomeriertem Polymergries betrug 645 g Polypropylengries, was einer Produktivität von 2.970 gPP/gKat entspricht.

### Beispiel 8

Die Präparation des Katalysators erfolgte analog Beispiel 7.1.

Die Parameter der Polymerisation wurden analog Beispiel 7.2 gewählt. Hierbei wurden 200 mg Trägerkatalysator in Gegenwart von 9 ml Triisobutylaluminium (2 M in Heptan) und 1 ml Diisobutylaluminiumhydrid (2 M in Heptan) über eine Dosierschleuse in den Autoklaven zugegeben. Die während der Polymerisation entstehende Reaktionswärme wurde durch Gegenkühlung abgeführt, so daß die Innentemperatur konstant gehalten wird. Die Differenz der Kühlmittelvorlauftemperatur zur Innentemperatur in Abhängigkeit der Zeit wurde on-line bestimmt. Nach 15 Minuten wurde die maximale Temperaturdifferenz ΔTₘₐₓ von 5,8°C erreicht. Im Vergleich zu Beispiel 7.2 tritt ein langsamer Polymerisationsstart auf und die ΔT-Werte in Beispiel 8 liegen auf einem deutlich höheren Niveau (1,5 bis 2°C) nach Erreichen der Maximaltemperatur. Nach insgesamt 60 Minuten wurde die Polymerisation beendet. Nach beendeter Polymerisation wurde 10 Minuten lang auf Atmosphärendruck entspannt und das entstandene Polymerisat im Stickstoffstrom ausgetragen. Die Produktmorphologie war von hervorragender Qualität und Einschmelzungen, Brockenbildungen und Reaktorbeläge wurden vermieden. Es wurden 1.240 g Polypropylengries erhalten, was einer Produktivität von 5.950 gPP/gKat entspricht.

### Beispiel 9

Die Präparation des Katalysators erfolgte analog Beispiel 7.1,

Die Parameter der Polymerisation wurden analog Beispiel 7.2 gewählt. Hierbei wurden 200 mg Trägerkatalysator mit einem Gemisch von 9 ml Triisobutylaluminium (2 M in Heptan ) und 1 ml Diisobutylaluminiumhydrid (2 M in Heptan) versetzt und 4 Stunden bei Raumtemperatur stehen gelassen. Anschließend wurde die Katalysatorsuspension über eine Dosierschleuse in den Autoklaven zugegeben. Die während der Polymerisation entstehende Reaktionswärme wurde durch Gegenkühlung abgeführt, so daß die Innentemperatur konstant gehalten wird. Die Differenz der Kühlmittelvorlauftemperatur zur Innentemperatur in Abhängigkeit der Zeit wurde on-line bestimmt. Nach 18 Minuten wurde die maximale Temperaturdifferenz ΔTₘₐₓ von 5,3°C erreicht. Im Vergleich zu Beispiel 7.2 tritt ein langsamer Polymerisationsstart auf und die ΔT-Werte in Beispiel 9 liegen auf einem deutlich höheren Niveau (1,5 bis 2,3°C) nach Erreichen der Maximaltemperatur. Nach insgesamt 60 Minuten wurde die Polymerisation beendet. Nach beendeter Polymerisation wurde 10 Minuten lang auf Atmosphärendruck entspannt und das entstandene Polymerisat im Stickstoffstrom ausgetragen. Die Produktmorphologie war von hervorragender Qualität und Einschmelzungen, Brockenbildungen und Reaktorbeläge wurden vermieden. Es wurden 1.320 g Polypropylengries erhalten, was einer Produktivität von 6.350 gPP/gKat entspricht.

### Beispiel 10

Die Präparation des Katalysators erfolgte analog Beispiel 7.1.

In einen trockenen mit Stickstoff gespülten 10 l Autoklaven wurden nacheinander 50 g Polypropylengries und ein Gemisch aus 9 ml Triisobutylaluminium (2 M in Heptan) und 1 ml Diisobutylaluminiumhydrid (2 M in Heptan) zugegeben und 15 Minuten gerührt. Anschließend wurden 200 mg Trägerkatalysator im Stickstoffgegenstrom in den Reaktor gefüllt, dieser wurde verschlossen und bei einer Rührerdrehzahl von 350 U/min bei 25°C mit 7 l flüssigem Propylen befüllt. Nach 30 Minuten Vorpolymerisation wurde schrittweise die Temperatur auf 65°C erhöht. Anschließend wurde bei 65°C Innentemperatur 60 Minuten polymerisiert. Nach beendeter Polymerisation wurde 10 Minuten lang auf Atmosphärendruck entspannt und das entstandene Polymerisat im Stickstoffstrom ausgetragen. Man erhielt 1.360 g Polypropylengrieß, was einer Produktivität von 6.550 gPP/gKat entspricht. Die Produktmorphologie war von hervorragender Qualität und Einschmelzungen, Brockenbildungen und Reaktorbeläge wurden vermieden.

### Beispiel 11

Es wurde analog Beispiel 7.1 bei der Kieselgeldesaktivierung verfahren. Bei der Metallocenträgerung wurde das Diisobutylaluminiumhydrid direkt in die Katalysatorherstellung integriert. Hierbei wurde folgendes verändert:

Das Methylalumoxan desaktivierte Kieselgel wurde zu einer Mischung von 525 mg Bis-[3,3'-(2-Methyl-benzo[e]indenyl)dimethylsilandiylzirkoniumdichlorid und 120 ml 1,53 molare Methylalumoxanlösung (in Toluol, Fa. Witco) zugegeben und bei Raumtemperatur gerührt. Nach 20 Stunden wurde innerhalb von 4 Stunden eine Lösung von-200 ml iso-Dodekan und 5 ml Diisobutylaluminiumhydrid (2 M in Heptan) langsam und kontrolliert zugegeben und weitere 1,5 Stunden bei Raumtemperatur gerührt. Anschließend wurde der Feststoff abfiltriert, mit je 25 ml Pentan gewaschen und im Stickstoffwirbelstrom getrocknet. Die Ausbeute am geträgerten Katalysator betrug 16,0 g.

Die Polymerisation erfolgte analog Beispiel 10, wobei statt dem Triisobutylaluminium/Diisobutylaluminiumhydrid-Gemisch 10 ml Triisobutylaluminium (2 M in Heptan) eingesetzt wurden. Es wurden 1.270 g Polypropylengrieß erhalten, was einer Produktivität von 6.100 gPP/gKat entspricht.

### Vergleichsbeispiel V6

Die Präparation des Katalysators erfolgte analog Beispiel 7.1.

Die Polymerisation erfolgte analog Beispiel 10 (Vorpolymerisation), wobei statt dem Triisobutylaluminium/Diisobutylaluminiumhydrid-Gemisch 10 ml Triisobutylaluminium (2 M in Heptan) eingesetzt wurden. Es wurden 1.060 g Polypropylengrieß erhalten, was einer Produktivität von 5.050 gPP/gKat entspricht.

## Patentansprüche

1. Verfahren zur Herstellung von Polymerisaten von C₂- bis C₁₂-Alkenen bei Temperaturen im Bereich von -50 bis 300°C und Drücken von 0,5 bis 3000 bar in Gegenwart eines Katalysatorsystems enthaltend
A) einen Metallocenkomplex
und
B) eine metalloceniumionenbildende Verbindung,
dadurch gekennzeichnet, daß man eine Verbindung der allgemeinen Formel I 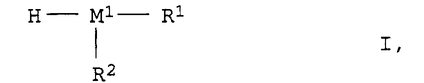 in der
M¹ Bor, Aluminium, Gallium, Indium oder Thallium bedeutet
und
R¹, R² für Wasserstoff, C₁- bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest, 5- bis 7-gliedriges Cycloalkyl, das seinerseits ein C₁- bis C₁₀-Alkyl als Substituent tragen kann oder wobei R¹ und R² gemeinsam für 4 bis 15 C-Atome aufweisende cyclische Gruppen stehen,
zusetzt.

2. Verfahren nach Anspruch 1, dadurch gekennzeichnet, daß R¹ und R² in der allgemeinen Formel I gemeinsam für 4 bis 15 C-Atome aufweisende bicyclische Gruppen stehen.

3. Verfahren nach den Ansprüchen 1 bis 2, dadurch gekennzeichnet, daß M¹ in der allgemeinen Formel I für Bor steht.

4. Verfahren nach den Ansprüchen 1 bis 3, dadurch gekennzeichnet, daß eine Metallverbindung der allgemeinen Formel IV
M⁴(R²⁴)ᵣ(R²⁵)ₛ(R²⁶)ₜ IV
in der
M⁴ ein Alkali-, ein Erdalkalimetall oder ein Metall der III. Hauptgruppe des Periodensystems, d.h. Bor, Aluminium, Gallium, Indium oder Thallium bedeutet,
R24 C₁- bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest,
R²⁵, R²⁶ Halogen, C₁- bis C₁₀-Alkyl, C₆- bis C₁₅-Aryl, Alkylaryl, Arylalkyl oder Alkoxy mit jeweils 1 bis 10 C-Atomen im Alkylrest und 6 bis 20 C-Atomen im Arylrest,
r eine ganze Zahl von 1 bis 3 und
s und t ganze Zahlen von 0 bis 2 bedeuten, wobei die Summe r+s+t der Wertigkeit von M⁴ entspricht,
mitverwendet wird.

5. Verfahren nach den Ansprüchen 1 bis 4, dadurch gekennzeichnet, daß ein vorpolymerisiertes Ktalysatorsystem verwendet wird.

## Claims

1. A process for the preparation of polymers of C₂-C₁₂-alkenes at from -50 to 300°C and from 0.5 to 3000 bar in the presence of a catalyst system containing
A) a metallocene complex
and
B) a compound forming metallocenium ions,
wherein a compound of the general formula I 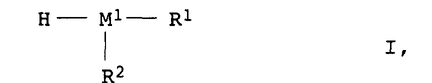 wherein
M¹ is boron, aluminum, gallium, indium or thallium
and
R¹, R² are each hydrogen, C₁-C₁₀-alkyl, C₆-C₁₅-aryl, alkylaryl or arylalkyl, each having 1 to 10 carbon atoms in the alkyl radical and 6 to 20 carbon atoms in the aryl radical, or 5- to 7-membered cycloalkyl which in turn may carry C₁-C₁₀-alkyl as a substituent, or R¹ and R² together form a cyclic group of 4 to 15 carbon atoms,
is added.

2. A process as claimed in claim 1, wherein R¹ and R² in the formula I together form a bicyclic group of 4 to 15 carbon atoms.

3. A process as claimed in either of claims 1 and 2, wherein M¹ in the formula I is boron.

4. A process as claimed in any of claims 1 to 3, wherein a metal compound of the formula IV
M⁴(R²⁴)ᵣ(R²⁵)ₛ(R²⁶)ₜ IV
where
M⁴ is an alkali metal, an alkaline earth metal or a metal of main group III of the Periodic Table of the Elements, i.e. boron, aluminum, gallium, indium or thallium,
R²⁴ is C₁- to C₁₀-alkyl, C₆- to C₁₅-aryl, alkylaryl or arylalkyl, each having 1 to 10 carbon atoms in the alkyl radical and 6 to 20 carbon atoms in the aryl radical,
R²⁵, R²⁶ are each halogen, C₁- to C₁₀-alkyl, C₆- to C₁₅-aryl, alkylaryl, arylalkyl or alkoxy, each having 1 to 10 carbon atoms in the alkyl radical and 6 to 20 carbon atoms in the aryl radical,
r is an integer from 1 to 3 and
s and t are integers from 0 to 2, the sum r+s+t corresponding to the valency of M⁴,
is present.

5. A process as claimed in any of claims 1 to 4, wherein a prepolymerized catalyst system is used.

## Revendications

1. Procédé de préparation de polymères d'alcènes en C₂ à C₁₂ à des températures dans la plage de -50 à 300°C et sous des pressions de 0,5 à 3 000 bars en présence d'un système de catalyseur contenant
A) un complexe à métallocène
et
B) un composé formant des ions métallocénium,
caractérisé en ce que l'on ajoute un composé de formule générale I 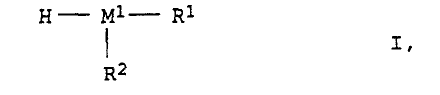 dans laquelle
M₁ représente un atome de bore, d'aluminium, de gallium, d'indium ou de thallium
et
R₁, R₂ représentent un atome d'hydrogène, un groupe alkyle en C₁ à C₁₀, aryle en C₆ à C₁₅, alkylaryle ou arylalkyle avec respectivement 1 à 10 atomes de C dans le résidu alkyle et 6 à 20 atomes de carbone dans le résidu aryle, un groupe cycloalkyle de 5 à 7 maillons, qui peut porter de son côté un groupe alkyle en C₁ à C₁₀ en tant que substituant ou bien R¹ et R² représentent ensemble des groupes cycliques comportant 4 à 15 atomes de C.

2. Procédé selon la revendication 1, caractérisé en ce que R¹ et R² dans la formule générale I représentent ensemble des groupes bicycliques comportant 4 à 15 atomes de carbone.

3. Procédé selon les revendications 1 à 2, caractérisé en ce que M¹ dans la formule générale I représente le bore.

4. Procédé selon les revendications 1 à 3, caractérisé en ce que l'on utilise un composé métallique de formule générale IV
M⁴(R²⁴)ᵣ(R²⁵)ₛ(R²⁶)ₜ
dans laquelle
M⁴ représente un métal alcalin, un métal alcalinoterreux ou un métal du Groupe Principal III du Tableau Périodique, à savoir le bore, l'aluminium, le gallium, l'indium ou le thallium,
R²⁴ représente un groupe alkyle en C₁ à C₁₀, aryle en C₆ à C₁₅, alkylaryle ou arylalkyle ayant respectivement 1 à 10 atomes de C dans le résidu alkyle et 6 à 20 atomes de C dans le résidu aryle,
R²⁵, R²⁶ représentent un atome d'halogène, un groupe alkyle en C₁ à C₁₀, aryle en C₆ à C₁₅, alkylaryle, arylalkyle ou alcoxy ayant respectivement 1 à 10 atomes de C dans le résidu alkyle et 6 à 20 atomes de C dans le résidu aryle,
r représente un nombre entier de 1 à 3 et
s et t représentent des nombres entiers de 0 à 2, la somme r+s+t correspondant à la valence de M⁴.

5. Procédé selon les revendications 1 à 4, caractérisé en ce que l'on utilise un système de catalyseur pré-polymérisé.
